(19) Europäisches Patentamt

European Patent Office

Office européen des brevets

(11) Veröffentlichungsnummer: **0 274 623 B1**

## EUROPÄISCHE PATENTSCHRIFT

(45) Veröffentlichungstag der Patentschrift: **15.05.91**

(51) Int. Cl.5: **D05B 69/22**

(21) Anmeldenummer: **87117260.7**

(22) Anmeldetag: **24.11.87**

(54) **Elektromotorischer Antrieb für eine Nähmaschine, insbesondere eine Industrie-Nähmaschine.**

(30) Priorität: **11.12.86 DE 3642277**

(43) Veröffentlichungstag der Anmeldung:
**20.07.88 Patentblatt 88/29**

(45) Bekanntmachung des Hinweises auf die
Patenterteilung:
**15.05.91 Patentblatt 91/20**

(84) Benannte Vertragsstaaten:
**DE ES FR GB IT**

(56) Entgegenhaltungen:
**EP-A- 0 103 364       EP-A- 0 176 599**
**WO-A-82/03879       WO-A-85/03958**
**GB-A- 2 028 388       GB-A- 2 135 345**
**US-A- 4 150 634**

**PATENT ABSTRACTS OF JAPAN, Band 6, Nr.
77 (E-106)[955], 14. Mai 1982; & JP-A-57 16
583 (TOKYO JIYUUKI KOGYO K.K.) 28-01-1982**

(73) Patentinhaber: **Frankl & Kirchner GmbH. & Co.
KG Fabrik für Elektromotoren und elektrische Apparate
Scheffelstrasse 73
W-6830 Schwetzingen(DE)**

(72) Erfinder: **Rohr, Gustav, Dr. Dr.-Ing.
Heidelberger Strasse 32
W-6907 Nussloch(DE)**
Erfinder: **Nohl, Gerd, Dipl.-Phys.
Eckertswiesen 15
W-6909 Rauenberg(DE)**

(74) Vertreter: **Schneck, Herbert, Dipl.-Phys., Dr. et
al
Rau & Schneck Patentanwälte Königstrasse
2
W-8500 Nürnberg 1(DE)**

**Beschreibung**

Die Erfindung richtet sich auf einen elektromotorischen Antrieb für eine Nähmaschine, insbesondere eine Industrienähmaschine mit einer zwischen einer oberen und unteren Endlage über eine Nähmaschinen-Hauptwelle hin- und herbewegbaren Nadel, wobei der Antrieb mit der Nadel in direkter Antriebsverbindung steht und über eine Steuereinrichtung drehzahlveränderbar ansteuerbar ist. Eine derartig Maschine ist aus dem Dokument EP-A-0 176 599 bekannt.

Herkömmlicherweise werden Industrienähmaschinen in großem Umfang indirekt angetrieben. Dies bedeutet, daß der antreibende Elektromotor im Betriebszustand mit konstanter Drehzahl läuft ebenso wie eine hiermit in Antriebsverbindung stehende Schwungscheibe. An die Schwungscheibe kann mittels einer elektromagnetischen Kupplungs-Brems-Einrichtung durch wechselweise Magnetisierung einer Kupplungs- bzw. Bremsspule die Hauptwelle der Nähmaschine angekoppelt werden, wobei das Trägheitsmoment des Brems-Kupplungs-Systems etwa nochmal so groß ist wie das der Nähmaschine selbst.

Bei Direktantrieben der in Betracht stehenden Art läuft der Antriebsmotor synchron mit der Hauptwelle hoch bzw. wird entsprechend abgebremst. Dementsprechend wird das Zeitverhalten der Gesamtanordnung von Antrieb und Nähmaschine wesentlich mitbestimmt durch die Trägheitsmomente der jeweils zu beschleunigenden Wellen.

Hiervon ausgehend liegt der Erfindung die Aufgabe zugrunde, zur Verbesserung des dynamischen Antriebsverhaltens eine Reduktion der auftretenden Trägheitsmomente zu erzielen.

Diese Aufgabe wird erfindungsgemäß gelöst durch wenigstens einen mit der Steuereinrichtung elektrisch verbundenen Eingabeschalter zur Eingabe von Befehlsimpulsen zur schrittweisen Betätigung des Antriebs derart, daß mit jedem Befehlsimpuls eine bestimmte, definierte Schrittweite des Antriebs und damit der Hauptwelle ausgelöst wird.

Dieser Eingabeschalter ist also zusätzlich zu der üblichen Drehzahlsteuerung der Hauptwelle einer Nähmaschine über ein Fußpedal vorgesehen und dient dazu, ausgehend vom Ruhezustand der Hauptwelle der Nähmaschine eine bestimmte Nadelposition definiert und manuell anzusteuern. Dabei kann die definierte Schrittweite, welche durch die Betätigung des Eingabeschalters ausgelöst wird, entweder absolut vorgegeben sein, d.h. in bestimmten Drehwinkelgraden der Hauptwelle, oder derart, daß jeweils eine bestimmte Endlage, z.B. Nadelhochstellung, angefahren wird oder auch dadurch, daß sie durch die Zeitdauer der Betätigung des Eingabeschalters vorgegeben wird.

Dementsprechend wird durch eine derartige Eingabetaste das Vorsehen eines Handrades, welches herkömmlicherweise das manuelle Anfahren einer bestimmten Nadelposition, z.B. für Justierarbeiten oder zum Einfädeln des Fadens ermöglicht, entbehrlich. Da die herkömmlichen Handräder und Riemenscheiben einerseits ein hohes Trägheitsmoment aufweisen und andererseits in direkter Antriebsverbindung mit der Hauptwelle einer Nähmaschine stehen, wird durch die erfindungsgemäße Maßnahme eine ganz wesentliche Reduktion des Trägheitsmoments und damit eine Verbesserung des Antriebsverhaltens erreicht. Bei durch den technischen Standard vorgegebenen Beschleunigungs-und Abbremszeiten wird durch die Reduktion der zu beschleunigenden Trägheitsmoments auch die aufgenommene Leistung während der Beschleunigungs- bzw. Bremsphase reduziert. Hierdurch können in der Leistungsendstufe des Antriebs leistungsärmere Bauelemente verwendet werden, was wesentlich zu einer Verminderung des Herstellungspreises beiträgt. Darüber hinaus wird der Wirkungsgrad des Antriebs erhöht und demgegenüber wiederum die dem Versorgungsnetz entnommene, kostenverursachende Energie reduziert.

In weiterer Ausgestaltung der Erfindung ist vorgesehen, daß zwei als Tastschalter ausgebildete Eingabeschalter vorgesehen sind, wovon der eine zur Auslösung von Befehlsimpulsen für eine Bewegung des Antriebs in eine erste Richtung und der zweite zur Auslösung von Befehlsimpulsen für eine Bewegung des Antriebs in eine zweite Richtung ausgebildet sind.

Bei dieser Ausführungsform ist also die definierte Schrittweite der Antriebsbewegung aufgrund der Eingabetasten in Form von absoluten Drehwinkelgraden vorgegeben. Durch wahlweise bzw. wechselweise Betätigung der beiden Tasten kann eine Vorwärts- bzw. Rückwärtsbewegung in entsprechenden Schritten und damit eine korrespondierende Auf- und Abbewegung der Nadel erreicht werden, so daß sehr feinfühlig eine bestimmte, gewünschte Nadelposition angefahren werden kann.

Vorteilhafterweise ist vorgesehen, daß ein Handrad lösbar auf eine mit einer Antriebswelle des Antriebs in Antriebsverbindung stehende Welle aufsetzbar ist. Auf diese Weise ist es möglich, für bestimmte Zwecke außerhalb des normalen Nähbetriebes, also z.B. zu Justierzwecken im Servicefall, ein Handrad aufzusetzen und in herkömmlicherweise mit Hilfe dieses Handrades eine bestimmte Nadelposition einzustellen.

Gleichwohl kann im normalen Betrieb des Handrad entfallen, so daß auch die hierfür erforderlichen Schutzeinrichtungen nicht vorgesehen werden müssen.

Weitere Merkmale, Vorteile und Einzelheiten der Erfindung ergeben sich aus der folgenden Beschreibung einer bevorzugten Ausführungsform anhand der Zeichnung. Dabei zeigen

Fig. 1 einen erfindungsgemäßen, an einer Nähmaschine angeordneten Antrieb mit Steuereinrichtung, wobei die Nähmaschine teilweise aufgeschnitten dargestellt ist, und

Fig. 2 ein Blockschaltbild einer erfindungsgemäßen Schaltungsanordnung.

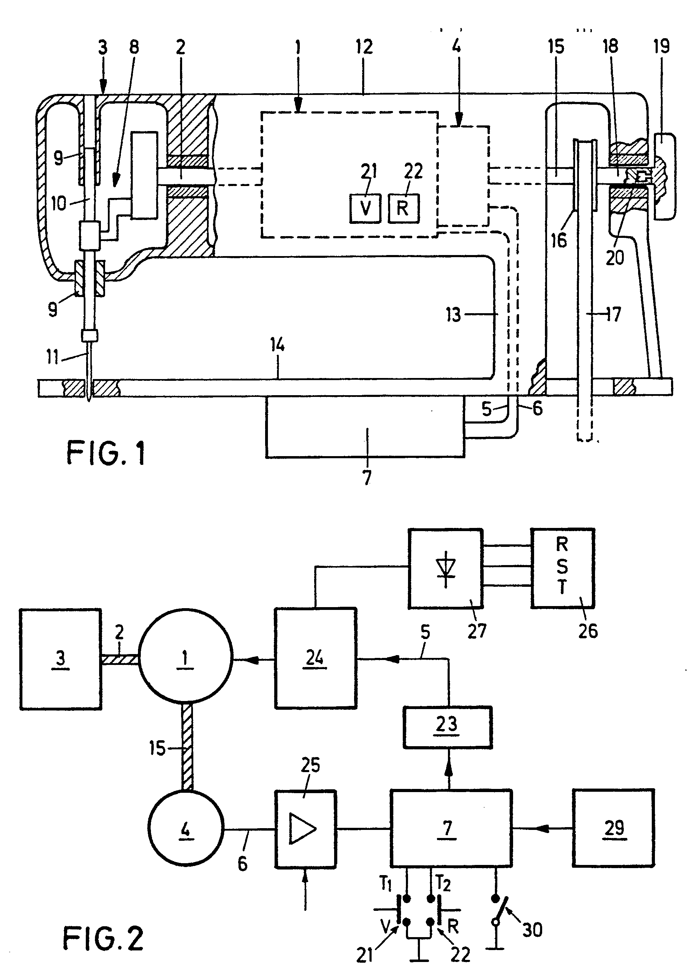

In der Zeichnung ist ein elektromotorischer Direktantrieb 1 lediglich schematisch dargestellt, weil es für die Realisierung des Erfindungsgedankens auf die detaillierte Ausgestaltung dieses Antriebs nicht ankommt. Beispielsweise kann als Antrieb 1 ein Gleichstrommotor vorgesehen sein, dessen Antriebswelle mit der Hauptwelle 2 der in Fig. 1 schematisch dargestellten Nähmaschine 3 fluchtet. Dem Antrieb 1 ist ein an sich bekannter Drehzahl-Istwert und Positionsgeber 4 zugeordnet. Antrieb 1 und Drehzahl-Istwert-und Positionsgeber 4 sind über Leitungen 5 bzw. 6 mit einer Steuereinrichtung 7 verbunden.

Die Nähmaschine 3 weist in an sich bekannter Weise einen von der Hauptwelle 2 angetriebenen Kurbeltrieb 8 auf, durch welchen eine in einem Lager 9 gelagerte Nadelstange 10, an deren Vorderende sich eine Nähnadel 11 befindet, auf- und abgehend angetrieben wird.

Ein Gehäuse 12 der Nähmaschine ist über einen Gehäusefuß 13 mit einer Grundplatte 14 verbunden.

Ein mit der Hauptwelle 2 fluchtender Wellenabschnitt 15 trägt eine Riemenscheibe 16, welche über einen Keilriemen 17 eine in der Zeichnung nicht dargestellte Unterwelle der Nähmaschine 3 antreibt.

Am hinteren Ende 18 des Wellenabschnitts 15 ist ein Handrad 19 über eine Nut- und Federverbindung 20, welche lediglich schematisch dargestellt ist, drehfest aber in axialer Richtung entfernbar aufgesetzt.

An der Außenseite des Gehäuses 12 der Nähmaschine 3 bzw. im Bereich des integrierten Antriebs 1 sind als Eingabeschalter 21, 22 zwei Tastschalter vorgesehen, welche zur Auslösung einer Vorwärts- bzw. Rückwärtsbewegung der Hauptwelle 2 über den Antrieb 1 und einer entsprechenden Hoch-Tief-Bewegung der Nadel 11 dienen.

Bei dem schematischen, in Fig. 2 dargestellten Blockschaltbild ist die mechanische Antriebsverbindung zwischen dem z.B. als Gleichstrommotor ausgebildeten Antrieb 1 und der Nähmaschine 3 dargestellt.

Die Steuereinrichtung 7 ist mittels der Leitung 5 über eine Treiberstufe 23 und eine Leistungsendstufe 24 mit dem Antrieb 1 verbunden.

Der Drehzahl-Istwert- und Positionsgeber 4 ist mit dem Antrieb 1 mechanisch, z.B. durch den gemeinsamen Wellenabschnitt 15 verbunden. Über die Leitung 6 ist der Drehzahl-Istwert- und Positionsgeber 4 über einen Verstärker bzw. Pulsformer 25 mit der Steuereinrichtung 7 verbunden.

Die Netzspannung wird über eine Netzversorgungseinrichtung 26 und einen Gleichrichter 27 über die Leitung 28 in die Leistungsendstufe 24 eingespeist.

Mit der Steuereinrichtung 7 verbunden ist ein Drehzahl-Sollwertgeber 29 sowie ein Drehrichtungsumschalter 30 und die beiden Eingabeschalter 21, 22, welche als Tastschalter ausgebildet sind und derart fungieren, daß durch deren wechselweise Betätigung einer schrittweiser Links- oder Rechtslauf des Antriebs ausgelöst wird.

Durch die vorstehend beschriebene Ausgestaltung ist es möglich, im normalen Nähbetrieb ohne das Handrad 19 zu arbeiten und gleichwohl die erforderlichen Nadelpositionierungen, z.B. für das Einfädeln des Fadens, vorzunehmen. Gesonderte Sicherungsmaßnahmen, wie z.B. Abdeckungen für das Handrad, entfallen.

Im Servicefall kann das Handrad 19 zur Durchführung mechanischer Justierarbeiten aufgesetzt werden.

## Ansprüche

1. Elektromotorischer Antrieb für eine Industrienähmaschine mit einer zwischen einer oberen und unteren Endlage über eine Nähmaschinen-Hauptwelle hin- und herbewegbaren Nadel, wobei der Antrieb mit der Hauptwelle in direkter Antriebsverbindung steht und über eine Steuereinrichtung mit einem Fußpedal drehzahlveränderbar ansteuerbar ist, gekennzeichnet durch wenigstens einen mit der Steuereinrichtung (7) elektrisch verbundenen zusätzlichen Eingabeschalter (21, 22) als Ersatz für das Handrad zur Eingabe von Befehlsimpulsen zur schrittweisen Betätigung des Antriebs (1) derart, daß mit jedem Befehlsimpuls eine bestimmte, definierte Schrittweite des Antriebs (1) und damit der Hauptwelle (2) ausgelöst wird.

2. Elektromotorischer Antrieb nach Anspruch 1, dadurch gekennzeichnet, daß zwei als Tastschalter ausgebildete Eingabeschalter (21, 22) vorgesehen sind, wovon der eine zur Auslösung von Befehlsimpulsen für eine Bewegung des Antriebs (1) in eine erste Richtung und der zweite zur Auslösung von Befehlsimpulsen für eine Bewegung des Antriebs (1) in eine zweite Richtung ausgebildet ist.

3. Antrieb nach Anspruch 1 oder 2, dadurch gekennzeichnet, daß ein Handrad (19) lösbar auf eine mit der Antriebswelle des Antriebs (1) in Antriebsverbindung stehende Welle (Wellenabschnitt 15) aufsetzbar ist.

**Claims**

1. Electric motor drive for an industrial sewing machine, with a needle that can be moved up and down between an upper and lower end position by a sewing machine main shaft, the drive being in direct driving connection with the main shaft and triggerable by a control system with a foot pedal for varying the rotational speed of the drive, characterized by at least one additional input switch (21, 22) electrically connected with the control system (7) and replacing the hand wheel, for the input of command pulses for the step-wise operation of the drive (1) such that each command pulse actuates a certain, defined amount of movement of the drive and hence of the main shaft (2).

2. Electric motor drive according to patent claim 1, characterized in that two input switches (21, 22) in the form of momentary contact switches are provided, one of which serves to trigger command pulses for a movement of the drive (1) in a first direction and the second to trigger command pulses for a movement of the drive (1) in a second direction.

3. Drive according to patent claim 1 or 2, characterized in that a hand wheel (19) is removably placeable on a shaft (shaft portion 15), which is in driving connection with the drive shaft of the drive (1).

**Revendications**

1. Dispositif d'entraînement par moteur électrique d'une machine à coudre industrielle comportant une aiguille mobile en va-et-vient entre une position d'extrémité inférieure et une position d'extrémité supérieure au moyen d'un arbre principal de machine à coudre, le dispositif étant en liaison d'entraînement directe avec l'arbre principal et pouvant être actionné à vitesse de rotation variable par un dispositif de commande muni d'une pédale, caractérisé par au moins un commutateur électrique d'entrée supplémentaire (7) relié électriquement au dispositif de commande, ce commutateur remplaçant le volant pour introduire des impulsions de commande destinées à actionner la commande d'entraînement pas-à-pas (1), de manière que chaque impulsion de commande déclenche un pas de grandeur définie et déterminée de la commande d'entraînement (1) et ainsi de l'arbre principal (2).

2. Dispositif d'entraînement par moteur électrique selon la revendication 1, caractérisé en ce qu'il est prévu deux commutateurs d'entrée (21, 22) constitués sous forme de commutateurs à touche, l'un d'eux étant constitué pour déclencher des impulsions de commande du mouvement de la commande d'entraînement (1) dans un premier sens et le second pour déclencher des impulsions de commande du mouvement de la commande d'entraînement (1) dans un second sens.

3. Dispositif d'entraînement selon la revendication 1 ou 2 caractérisé en ce qu'un volant (19) est engagé de façon démontable sur un arbre (tronçon d'arbre 15) qui est en liaison d'entraînement avec l'arbre d'entraînement de la commande d'entraînement (1).

FIG. 1

FIG.2